# EUROPEAN PATENT APPLICATION

(11) **EP 4 591 988 A1**
(43) Date of publication of application: **30.07.2025**
(21) Application number: 24153778.6
(22) Date of filing: 24.01.2024
(51) Int. Cl.: B02C 25/00, A23G 1/10, A23G 1/12, B02C 13/14, B02C 13/18, B02C 13/282, B02C 19/00, B02C 23/08, B02C 23/34, B02C 13/30, B02C 23/24

(54) **IMPACT MILL, IN PARTICULAR AN IMPACT CLASSIFIER MILL**

(71) Applicant: Royal Duyvis Wiener B.V., 1541 KD Koog aan de Zaan (NL)
(72) Inventor: Kruiver, Jan, 1541 KD Koog aan de Zaan (NL)
(74) Representative: De Vries & Metman

(57) **Abstract**

The invention relates to an impact mill, in particular an impact classifier mill (1), for breaking compacted or agglomerated particulate material, such as (cocoa) cake, chunks or kibbles, to smaller particles, preferably to a powder, the mill comprising a rotary beater comprising a shaft (2) carrying impact elements (3,5), an impact chamber (5) surrounding the beater, preferably concentrically, and having an at least substantially cylindrical, conical and/or curved impact wall (6), and a permanent magnet motor (20) for rotatably driving the beater.

## Description

The present invention relates to an impact mill, in particular an impact classifier mill, for breaking compacted or agglomerated particulate material, such as (cocoa) cake, chunks or kibbles, to smaller particles, preferably to a powder, the mill comprising a rotary beater comprising a shaft carrying impact elements, such as hammers, knives, blocks, or pins, e.g. mounted on a disc or on two or more arms, an impact chamber surrounding the beater, preferably concentrically, and having an at least substantially cylindrical, conical and/or curved impact wall, and a motor for rotatably driving the beater.

Impact classifier mills are known in the art.

WO 2005/107950 relates to a classifier mill, comprising a milling rotor with milling tools, an impact casing surrounding the milling rotor, and a classifying wheel. Fibrous substances or substances tending to clog may be reliably comminuted with such a mill, whereby the milling tools on the milling rotor are embodied as relatively flat teeth, running essentially radially outwards in the rotation plane thereof.

EP 2 158 969 relates to a separator mill that has a housing, in which a separator and a rotating milling rotor are arranged. Two drive shafts are provided for the separator and the milling rotor, where the drive shafts are led through the housing. A drive is provided with a drive motor, where a third drive shaft of the drive motor stands in drive connection directly with latter drive shaft of the milling rotor.

It is an object of the present invention to provide an impact mill that is more compact and/or that requires less parts.

To this end, the motor is a permanent magnet motor. In an embodiment, the motor directly drives the shaft of the beater and/or the rotational axis of the rotor of the motor and the rotational axis of the shaft are mutually fixed and/or aligned. It is preferred that the mill comprises a rotary classifier, in particular a classifier wheel, and a motor, preferably a permanent magnet motor, for rotatably driving the classifier.

Permanent magnet motors were found to enable a compact and more straight-forward design of impact classifier mills, in particular if the motor directly drives the beater and/or the classifier.

In an embodiment, the classifier comprises a wheel with radial mounted blades, located in the outlet of the mill, preferably in the top section of and central in the chamber. In an example, air and powder flow from the outside to the inside of this wheel. During this flow powder particles experiences a friction force from the air and a centrifugal force from the rotation speed. The balance of these forces cause particles below a selected diameter to flow through the wheel and larger particles to be thrown back to the grinding disk hammers.

In an embodiment, the classifier is connected to the rotor of the motor driving it by means of a further shaft.

In an embodiment, the shafts are arranged coaxially, i.e. share a common (imaginary) axis, and/or the motors are arranged coaxially.

In a particularly compact embodiment, one of the shafts extends through the other shaft and/or through the motor for rotatably driving the other shaft.

In an embodiment, both motors are positioned beneath the chamber and, preferably, one beneath the other.

In an embodiment, at least one of the shafts, preferably both, is rotatably supported by the bearings of the motor that drives it. It is preferred that the bearings with which the rotor is rotatably supported in the stator of the motor also provide the rotatable support for the shaft of the beater or the classifier, respectively.

In an embodiment, the stator of at least one of the motors is fixed relative to the chamber, to provide torque support.

In an example, the motor for the rotary beater is positioned beneath the chamber and fixedly supported by the chamber or by a frame carrying the chamber and the shaft of the rotary beater is hollow and fixedly attached to the rotor of that motor, i.e. directly driven by that motor and preferably rotatably supported by the bearings of the motor, which in principle enables dispensing with bearings specifically for the shaft. The motor for the classifier is positioned beneath the motor for the rotary beater and fixedly supported by the latter motor, by the chamber and/or by the frame and the shaft of the classifier extends through the hollow shaft of the rotary beater and is fixedly attached to the rotor of the motor for the classifier, i.e. directly driven by the motor and preferably rotatably supported by the bearings of that motor. This example enables a particularly efficient build.

In an embodiment, the mill comprises a controller to control, e.g. by sinusoidal signal and/or frequency, the rotational speed of at least one of the permanent magnet motors, preferably of both motors.

In an embodiment, the controller is arranged to control the rotational speed of the motor driving the rotary beater to obtain a circumferential speed of the beater, e.g. of the rim of a beater disc or the tips or ends of beater arms, within a range of 70 to 150 meter per second (m/s), preferably within a range of 90 to 130 m/s, and to control the rotational speed of the motor driving the classifier to obtain a circumferential speed of the classifier, e.g. of slots in the classifier, within a range of 10 to 60 m/s, preferably within a range of 20 to 50 m/s, preferably within a range of 25 to 45 m/s.

Typically, the beater and the classifier rotate in the same direction, i.e. air that enters the classifier is already rotating at a high speed. In an embodiment, the beater is driven by its motor and the classifier is slown by its motor. It is preferred that energy is recuperated from the motor that is/are slown. In an embodiment, at least part of the recuperated energy is supplied to the motor of the beater.

In an embodiment, at least one of the motors, preferably both, is (are) a permanent magnet synchronous motor and/or a liquid-cooled permanent magnet motor and/or has (have) the permanent magnets on the rotor.

In an embodiment, the motor for the beater has a rated power of at least 25 kiloWatt (kW), preferably at least 50 kW and/or a torque of at least 75 Newtonmeter (Nm) and/or wherein the motor for the classifier has a rated power of at least 3 kW, preferably at least 5 kW and/or a torque of at least 10 Nm.

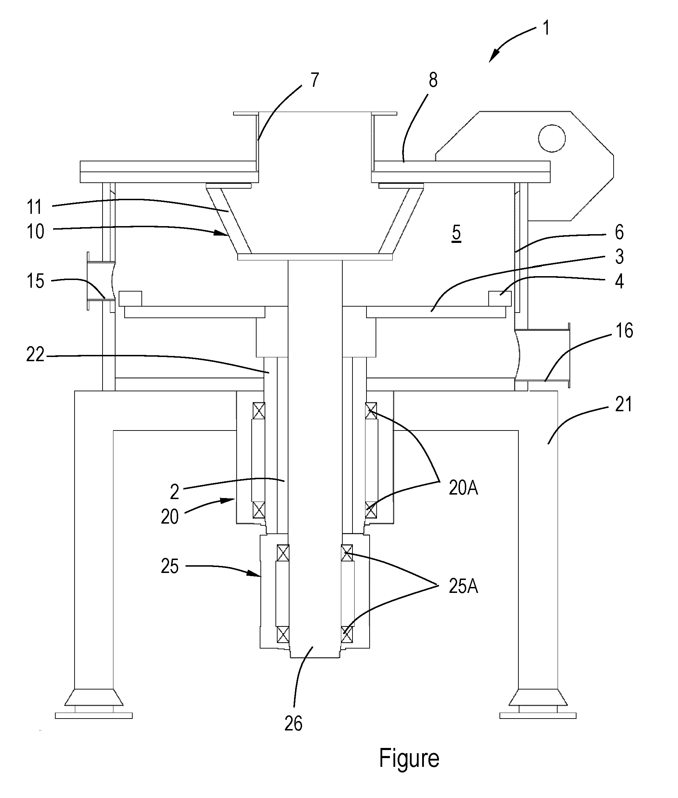

The invention will now be explained in more detail with reference to the Figure, which schematically shows a cross-section of an impact mill according to the invention.

The Figure is not necessarily to scale and details that are not required for understanding the present invention may have been omitted. Terms such as "up", "down", "above", "below", relate to the embodiment as oriented in the Figure. Further, elements that are at least substantially identical or that perform an at least substantially identical function are denoted by the same numeral.

The Figure shows an impact mill, in particular an impact classifier mill 1, for breaking compacted or agglomerated particulate material, such as (cocoa) cake, chunks or kibbles, to smaller particles, preferably to a powder. The mill comprises a rotary beater, in this example comprising a shaft 2 carrying a disc 3 provided with impact elements, such as hammers 4, an impact chamber 5, typically having an annular impact liner 6 and/or wall surrounding the beater concentrically and having an inner diameter in a range from 600 to 1400 millimeter (mm). In a specific example, the mill has a capacity of 4.000 kg per hour and the chamber has an inner diameter of 1200 mm.

A main outlet 7 is located in the top wall or lid 8 of the chamber and a classifier wheel 10 - having vertically inclined radially mounted blades 11 defining slits - is located in and/or just below the outlet of the mill. The spacing between the upper rim of the classifier wheel and the top wall or lid 8 of the chamber is in range from 0,4 to 1,0 millimeter, preferably 0,8 mm. Two inlets are located in the wall of the chamber: a first inlet 15 for agglomerated particulate material, such as (cocoa) cake, chunks or kibbles, located just above the beater disc 3 and a second inlet 16 for air located just below the beater disc.

A permanent magnet synchronous motor 20, e.g. a Oswald MFS20.35-8WI, for the beater disc is positioned beneath and fixedly supported by the chamber 5 or by a frame 21 carrying the chamber. The shaft 2 is hollow and secures the disc 3 to the rotor 22 of the motor, i.e. the motor directly drives and supports the disc.

A further permanent magnet synchronous motor 25 for the classifier wheel, is positioned beneath and secured, e.g. bolted to, the motor for the rotary beater. A shaft 26 secures the classifier wheel to the rotor of the further motor and extends through the hollow shaft 2 and through the motor 20 of the rotary beater 3, i.e. the further motor directly drives and supports the classifier wheel 10.

As a specific example, the shaft of the further motor is configured as an extension of the rotor of the further motor and/or each of the shafts is supported by the bearings (20A, 25) in its motor (20, 25).

The motors 20, 25 comprise a controller (not shown) to control, e.g. by sinusoidal signal and/or frequency in a manner known in itself, the rotational speed of the beater, such the tips of the beater arms have a circumferential speed in a range from 90 to 100 m/s.

The rotational axes of (the rotors of) the motors, of the shafts, and of the beater and the classifier wheel all at least substantially coincide, providing a particularly compact build and having a reduced number of parts.

During operation, in an example, cocoa kibbles are fed via the solids inlet 24 to the chamber 5 at a mass flow rate of 4.000 kg/h and air is supplied to the inlet 16 below the beater disc 3. The beater 3 is operated, via the controller, at a circumferential speed of approximately 100 m/s. The kibbles will be hit by the hammers 4 and hit the liner 6, which will cause the kibbles to fracture to a powder. For the kibbles feed only 25% of the total airflow is used, the other 75% is blown underneath the disk, which then flows through the gap between the grinding disk and the liner up into the grinding zone. The air speed needed to carry the kibbles into the mill is, e.g. at least 30 m/s.

The process air is circulated in a closed loop. After going through the mill, the powder is separated from the air in a product filter (not shown), the air is sucked through a fan, blown through an air cooler (not shown) and finally returned to the mill. The pressure inside the product filter and mill is below ambient (-100 mbar), in the air inlet it is around zero, and in the air cooler it is a little above zero (+20 mbar). The process air is also used for cooling the kibbles and the powder product.

The invention is not limited to the embodiment as described above, which can be varied in several ways within the scope of the claims. E.g., the beater mill according to the present invention is also suitable for grinding compacted pigments and other particulate material.

## Claims

1. Impact mill, in particular an impact classifier mill (1), for breaking compacted or agglomerated particulate material, such as (cocoa) cake, chunks or kibbles, to smaller particles, preferably to a powder, the mill comprising a rotary beater comprising a shaft (2) carrying impact elements (3,5), an impact chamber (5) surrounding the beater, preferably concentrically, and having an at least substantially cylindrical, conical and/or curved impact wall (6), and a motor for rotatably driving the beater, **characterized in that** the motor is a permanent magnet motor (20) .

2. Impact mill (1) according to claim 1, wherein the motor (20) directly drives the shaft (2) and/or wherein the rotational axis of the rotor of the motor and the rotational axis of the shaft (2) are mutually fixed and/or aligned.

3. Impact mill (1) according to claim 1 or 2, comprising a rotary classifier, in particular a classifier wheel (10), and a motor, preferably a permanent magnet motor (25), for rotatably driving the classifier.

4. Impact mill (1) according to claim 3, wherein the classifier (10) is connected to the rotor of the motor (25) driving it by means of a further shaft (26).

5. Impact mill (1) according to claim 3 or 4, wherein the shafts (2, 26) are arranged coaxially and/or wherein the motors (20, 25) are arranged coaxially.

6. Impact mill (1) according to any one of claims 3-5, wherein one of the shafts (26) extends through the other shaft (2) and/or through the motor (20) for rotatably driving the other shaft (2).

7. Impact mill (1) according to any one of claims 3-6, wherein both motors (20, 25) are positioned beneath the chamber (5) and, preferably, one beneath the other.

8. Impact mill (1) according to any one of claims 3-7, wherein at least one of the shafts (2, 26) is rotatably supported by the bearings (20A; 25A) of the motor (20; 25) that drives it.

9. Impact mill (1) according to any one of the preceding claims, wherein the stator of at least one of the motors (20, 25) is fixed relative to the chamber (5).

10. Impact mill (1) according to any one of the preceding claims, comprising a controller to control the rotational speed of at least one of the motors (20, 25).

11. Impact mill (1) according to claim 10, wherein the controller is arranged to control the rotational speed of the motor (20) driving the rotary beater (2, 3, 5) to obtain a circumferential speed of the beater within a range of 70 to 150 meter per second (m/s), preferably within a range of 90 to 130 m/s, and to control the rotational speed of the motor (25) driving the classifier (10) to obtain a circumferential speed of the classifier within a range of 10 to 60 m/s, preferably within a range of 20 to 50 m/s, preferably within a range of 25 to 45 m/s.

12. Impact mill (1) according to any one of the claims 3-11, wherein the beater (2, 3, 5) is driven by its motor (20) and the classifier (10) is slown by its motor (25) .

13. Impact mill (1) according to claim 12, wherein energy is recuperated from the motor (25) that is/are slown.

14. Impact mill (1) according to any one of the preceding claims, wherein at least one of the motors is a permanent magnet synchronous motor (20, 25) and/or a liquid-cooled permanent magnet motor (20, 25) and/or has the permanent magnets on the rotor (20, 25).

15. Impact mill (1) according to any one of the preceding claims, wherein the motor (20) for the beater has a rated power of at least 25 kiloWatt (kW), preferably at least 50 kW and/or a torque of at least 75 Newtonmeter (Nm) and/or wherein the motor (25) for the classifier has a rated power of at least 3 kW, preferably at least 5 kW and/or a torque of at least 10 Nm.
